# EUROPÄISCHE PATENTSCHRIFT

(11) **EP 1 629 709 B1**
(45) Veröffentlichungstag und Bekanntmachung des Hinweises auf die Patenterteilung: **17.10.2007**
(21) Anmeldenummer: 05015310.5
(22) Anmeldetag: 14.07.2005
(51) Int. Cl.: A01G 17/14

(54) **Pfahl aus profilgewalztem Metallblech für den Wein- oder Obstbau**
Laminated metal sheet post for wine and fruit growing
Piquet en tôle métallique laminée pour la viticulture et la culture fruitière

(30) Priorität: 24.08.2004 DE 102004041130; 21.10.2004 DE 202004016388 U
(43) Veröffentlichungstag der Anmeldung: 01.03.2006
(73) Patentinhaber: Voestalpine Präzisionsprofil GmbH, 50354 Hürth (DE)
(72) Erfinder: Schwarzbeck, Armin, 67269 Grünstadt (DE)
(74) Vertreter: Gesthuysen, von Rohr & Eggert

(56) Entgegenhaltungen:
- WO-A-02/18730
- DE-A1- 2 522 054
- DE-U1- 9 317 352
- DE-U1-6202004 006 54
- DE-U1-8202004 016 38
- FR-A- 2 836 331

## Beschreibung

Die Erfindung betrifft einen Pfahl aus profilgewalztem Metallblech für den Wein- oder Obstbau, insbesondere einen Weinbergpfahl, mit einem im wesentlichen U-förmigen Querschnitt, mit einem U-Rücken und mit zwei U-Schenkeln und mit Mitteln zur Aufnahme von Drähten, wobei die Mittel durch Ausstanzen und/oder Formbiegen aus den U-Schenkeln gebildet sind.

Derartige Pfähle, die auch als Spalierpfähle, Stützpfähle oder Zeilenpfähle, bzw. wenn sie im Weinbau eingesetzt werden als Weinbergpfähle oder Weinbaupfähle bezeichnet werden, werden seit vielen Jahren verwendet. Die Pfähle werden dabei meist zeilenweise zueinander angeordnet, wobei die Pfähle im wesentlichen senkrecht in den Erdboden hineingedrückt werden. Ursprünglich wurden zur Befestigung der zwischen den einzelnen Pfählen einer Zeile gespannten Drähte überwiegend Holzpfähle verwendet, an denen die Drähte mit Hilfe von Haken oder Krampen befestigt wurden. Daneben wurden wegen der besseren Haltbarkeit teilweise auch Betonpfähle eingesetzt. Mit der Verbreitung von landwirtschaftlichen Maschinen, insbesondere von sogenannten Vollerntemaschinen, sind die Holz- und Betonpfähle jedoch immer weiter zurückgedrängt worden.

Seit mehreren Jahren werden zunehmend aus profilierten bzw. profilgewalzten Metallblechen, insbesondere Stahlblechen, hergestellte Pfähle verwendet. Zunächst sind einfach profilierte Pfähle mit aus dem Blech ausgestanzten und abgebogenen Haken zum Einhängen und Befestigen der Drähte verwendet worden. Diese Pfähle haben jedoch den Nachteil, daß durch die Schlagstäbe der Vollerntemaschinen die Haken regelmäßig beschädigt, insbesondere zusammengedrückt, werden und somit die Haken vor dem Umhängen der Drähte wieder von Hand aufgebogen werden müssen. In der DE 93 17 352 U1 ist daher ein Weinbergpfahl vorgeschlagen worden, bei dem die Haken mittels einer Sicke verstärkt sind.

Aufgrund der zuvor beschriebenen Nachteile sind die zunächst ausschließlich verwendeten einfachen Pfähle in vielen Gebieten durch Pfähle, die aus profilierten Stahlblech hergestellten sind und innenliegende Haken aufweisen, verdrängt worden. Diese Pfähle haben einen etwa U-förmigen Querschnitt, wobei an den beiden U-Schenkeln nach außen vorspringende Längsrippen mit ihrerseits etwa U-förmigen Querschnitt ausgebildet sind. Aus diesen Längsrippen ist ein Teil der Wandung herausgestanzt und zur Bildung des innenliegenden Hakens abgebogen. Ein derartiger Pfahl ist beispielsweise aus der DE 25 22 054 A bekannt.

Pfähle für den Wein- oder Obstbau werden - unabhängig von ihrer konkreten Ausgestaltung - senkrecht in den Boden hineingedrückt bzw. mit Hilfe von landwirtschaftlichen Maschinen in den Boden gerammt, was zu einer erhöhten Beanspruchung des Pfahls führt. Der Pfahl soll dabei möglichst in einem Zug durch die Maschine in den Boden gerammt werden, wobei der Pfahl auch bei festem Erdboden nicht ausknicken darf. Um eine ausreichende Standfestigkeit im Erdboden zu erreichen, ist es erforderlich, daß der Pfahl entsprechend tief in den Boden hineingedrückt bzw. hineingerammt wird. Dabei kann die erforderliche Einschlagtiefe je nach Länge des Pfahls 500 mm und mehr, häufig ca. 700 mm betragen. Bei festem Boden, beispielsweise bei lehmigen oder hartem Tonboden, besteht dabei das Problem, daß die notwendige Einschlagtiefe nicht bzw. nur bei Beschädigung des Pfahls erreicht wird. Dann ist es erforderlich, zunächst mit einer Lanze ein Setzloch für den Pfahl vorzugraben. Dies ist natürlich mit zusätzlichem Aufwand und damit auch mit zusätzlichen Kosten verbunden und somit unerwünscht.

Der vorliegenden Erfindung liegt daher die Aufgabe zugrunde, einen eingangs beschriebenen Pfahl aus profilgewalztem Metallblech dahingehend zu verbessern, daß der Pfahl möglichst einfach auch in relativ harten Boden, beispielsweise in Lehmboden, hineingedrückt bzw. hineingerammt werden kann, wobei die Standfestigkeit im Erdboden und die Stabilität des Pfahls möglichst nicht verschlechtert werden soll.

Diese Aufgabe ist zunächst und im wesentlichen dadurch gelöst, daß im unteren Endbereich des Pfahls in mindestens einem U-Schenkeln mindestens ein Loch ausgebildet ist. Vorzugsweise sind in beiden U-Schenkeln jeweils mehrere Löcher übereinander angeordnet, wobei die Löcher als Langlöcher ausgebildet sind. Durch die Ausbildung der Löcher in den U-Schenkeln des Pfahls ergibt sich eine deutlich verbesserte Gleitfähigkeit des Pfahls beim Eindrücken in den Boden. Überraschenderweise hat sich dabei herausgestellt, daß durch die Ausbildung der Löcher in den U-Schenkeln die Stabilität des Pfahles nicht negativ beeinträchtigt wird. Durch die Ausbildung der Löcher, die einfach durch Stanzen hergestellt werden können, kann der Pfahl auch in einen relativ harten Boden ohne große Schwierigkeiten auf die erforderliche Einschlagtiefe eingedrückt werden.

Gemäß einer vorteilhaften Ausgestaltung der Erfindung sind das untere und/oder das obere Ende des Pfahles in Drahtrichtung gesehen derart abgeschrägt, daß der U-Rücken eine größere Länge als die Endbereiche der U-Schenkel aufweist. Der Pfahl ist somit an seinem oberen und vorzugsweise auch an seinem unteren Ende abgeschrägt. Diese einfache Maßnahme bewirkt ebenfalls erhebliche Verbesserungen beim Einschlagen des Pfahls in den Boden, da dadurch erreicht wird, daß ein beim Eindrücken des Pfahles verwendeter Drückbalken in erster Linie am stabileren U-Rücken und nicht an den empfindlicheren U-Schenkeln angreift. Dadurch kann auf die Verwendung eines ansonsten notwendigen Schlagschutzes, durch den verhindert werden soll, daß sich die Endbereiche der U-Schenkel in den Drückbalken einbohren, verzichtet werden.

Zur Erhöhung der Stabilität des Pfahles ist darüber hinaus vorzugsweise vorgesehen, daß zumindest im U-Rücken mehrere Sicken ausgebildet sind, so daß der U-Rücken nicht eben sondern wellig verläuft. Die Sicken dienen dabei zur Erhöhung der Stabilität des U-Rückens und damit zur Erhöhung der Stabilität des Pfahles insgesamt.

Gemäß einer weiteren vorteilhaften Ausgestaltung des erfindungsgemäßen Pfahls sind die Endbereiche der U-Schenkel im wesentlich U-förmig nach außen abgebogen, so daß die Endbereiche der U-Schenkel offene Rinnen bilden, wobei in den Rinnen zusätzliche Mittel zur Aufnahme der Drähte durch Ausstanzen und/oder Formbiegen ausgebildet sind. Durch die nach außen abgebogenen Endbereiche der U-Schenkel weist der Pfahl ein offenes Querprofil auf, wodurch ein Festsetzen oder Verkeilen von Steinen im Inneren des Pfahls beim Eintreiben des Pfahles in den Erdboden verhindert wird. Hierdurch werden die Einschlageigenschaften des Pfahls zusätzlich verbessert.

Dadurch, daß die Endbereiche der U-Schenkel nach außen und nicht nach innen abgebogen sind, ergibt sich zunächst eine deutlich größere Querschnittsfläche des Pfahls. Durch die Ausbildung der Rinnen erhöht sich darüber hinaus auch das Volumen der vom Pfahl beim Eintreiben in den Erdboden umschlossenen Erdsäule. Beide Größen - Querschnittsfläche des Pfahles und Volumen der umschlossenen Erdsäule - beeinflussen wesentlich die Standfestigkeit des Pfahles, so daß ein derart ausgestalteter Pfahl eine deutlich verbesserte Standfestigkeit aufweist.

Schließlich kann durch die in den Rinnen ausgebildeten zusätzlichen Mittel zur Aufnahme der Drähte die Gefahr des Aushängens der Drähte deutlich verringert werden, ohne das Einhängen oder Umhängen der Drähte zu erschweren. Bei dem bevorzugten Ausführungsbeispiel werden die Drähte somit sowohl von einem an den U-Schenkeln ausgebildeten Mittel zur Aufnahme, als auch von einem in den Rinnen ausgebildeten Mittel zur Aufnahme gehalten. Vorteilhafterweise sind dabei die Mittel zur Aufnahme der Drähte in den U-Schenkeln und die Mittel zur Aufnahme der Drähte in den Rinnen jeweils in Drahtrichtung paarweise hintereinanderliegend und im wesentlichen auf gleicher Höhe zueinander angeordnet. Dadurch ist ein einfaches Ein- und Umhängen eines Drahtes möglich, ohne daß der Draht zwischen den beiden Mitteln zur Aufnahme abgebogen bzw. abgekröpft werden muß.

Gemäß einer bevorzugten - für sich bekannten - Ausgestaltung sind die Mittel zur Aufnahme der Drähte in den Rinnen als nach außen offene Aufnahmetaschen ausgebildet. Eine Aufnahmetasche besteht dabei aus einem im Rücken der Rinnen ausgebildeten Aufnahmefenster und einer im Randbereich der Rinne ausgebildeten Zunge. Eine solche Aufnahmetasche stellt einen innenliegenden Haken dar, so daß die Aufnahmetasche und damit das Mittel zur Aufnahme des Drahtes durch die Schlagstäbe einer Vollerntemaschine nicht beschädigt wird.

Bei der Ausgestaltung der Mittel zur Aufnahme der Drähte an den U-Schenkeln gibt es verschiedene Möglichkeiten, wozu auf die WO 02/18730 A1 verwiesen wird. Beispielsweise kann an den U-Schenkeln jeweils eine nach außen vorstehende Längsrippe ausgebildet sein, wobei die Längsrippen einen nach innen offenen, im wesentlichen U-förmigen Querschnitt aufweisen und in den Längsrippen nach außen offene Aufnahmetaschen zur Aufnahme der Drähte ausgebildet sind. Die Aufnahmetaschen in den Längsrippen der U-Schenkel stellen dann ebenfalls innenliegende Haken zur Aufnahme der Drähte dar.

Gemäß einer alternativen Ausgestaltung ist an den U-Schenkeln je mindestens ein nach unten offener, zungenartiger Haken als Mittel zur Aufnahme eines Drahtes ausgebildet. Bei dieser alternativen Ausgestaltung des Pfahls entfällt somit die Ausbildung der nach außen vorstehenden Längsrippen an den U-Schenkeln. Dadurch wird bei im wesentlichen gleicher Querschnittsfläche des Pfahls zu dessen Herstellung nur ein Metallblech mit einer geringeren Breite benötigt. Es ergibt sich somit eine - insbesondere bei hohen Stückzahlen - nicht unerhebliche Materialersparnis.

Gemäß einer letzten vorteilhaften Ausgestaltung der Erfindung ist an dem U-Rücken und/oder an den U-Schenkeln mindestens eine Markierung vorgesehen, die als Setzmarke dient. Durch die Markierung wird somit auf einfache Art und Weise angezeigt, wie weit der jeweilige Pfahl in den Boden eingedrückt werden muß. Als Markierung kann dabei insbesondere eine farbliche Markierung oder eine andere optische Markierung, beispielsweise eine Profilierung, verwendet werden.

Im einzelnen gibt es nun eine Vielzahl von Möglichkeiten, den erfindungsgemäßen Pfahl auszugestalten und weiterzubilden. Dazu wird verwiesen auf die dem Schutzanspruch 1 nachgeordneten Schutzansprüche sowie auf die Beschreibung bevorzugter Ausführungsbeispiele, in Verbindung mit der Zeichnung. In der Zeichnung zeigen
- Fig. 1: einen erfindungsgemäßen Weinbergpfahl, in Rückenansicht und in Seitenansicht,
- Fig. 2: eine vergrößerte Darstellung eines Teils des Weinbergpfahls gemäß der Fig. 1,
- Fig. 3: einen Querschnitt durch den Weinbergpfahl gemäß der Fig. 1 und
- Fig. 4: zwei schematische Darstellungen des oberen Bereichs eines Weinbergpfahls, jeweils mit einem Draht, dargestellt in zwei unterschiedlichen Positionen.

Der in den Figuren dargestellte Weinbergpfahl 1 wird aus einem Metallblech durch Profilwalzen hergestellt. Zur Erreichung eines ausreichenden Korrosionsschutzes wird der Weinbergpfahl 1, der meist aus Stahl besteht, in der Regel verzinkt oder beschichtet, wobei unterschiedliche Verzinkungsverfahren oder Beschichtungsverfahren angewandt werden können. Der Weinbergpfahl 1 hat je nach Einsatzgebiet und damit je nach Anbaugebiet üblicherweise eine Länge zwischen 1,40 m bis 3,0 m, wobei im aufgestellten Zustand des Weinbergpfahls 1 etwa die unteren 500 bis 800 mm in den Erdboden eingesteckt sind.

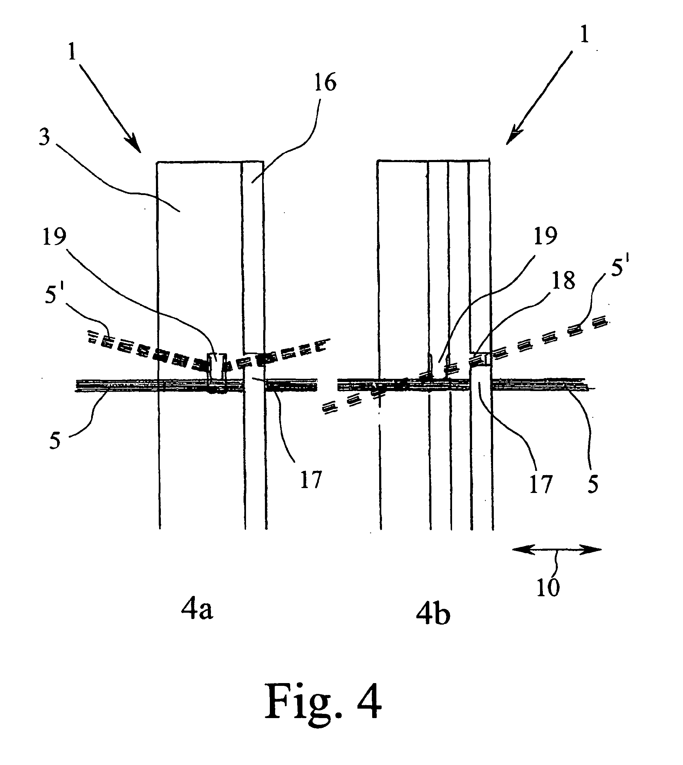

Der Weinbergpfahl 1 weist einen im wesentlichen U-förmigen Querschnitt mit einem U-Rücken 2 und mit zwei U-Schenkeln 3, 4 auf. Über die Länge des Weinbergpfahls 1 sind eine Reihe von Mitteln zur Aufnahme von - in Fig. 4 gezeigten - Drähten 5 in der Regel in jeweils gleichem Abstand zueinander angeordnet, wobei jedoch im unteren Endbereich 6 des Weinbergpfahls 1, der in den Erdboden eingesteckt wird, keine derartigen Mittel ausgebildet sind.

Erfindungsgemäß sind im unteren Endbereich 6 in den beiden U-Schenkeln 3, 4 mehrere Löcher 7 ausgebildet, wobei im dargestellten Ausführungsbeispiel in jedem U-Schenkel 3, 4 jeweils drei Löcher 7 mit gleichmäßigem Abstand übereinander angeordnet sind. Die Löcher 7 sind dabei als Langlöcher ausgebildet, deren Länge etwa drei- bis fünfmal so groß ist wie deren Breite. Im Ausführungsbeispiel haben die Löcher 7 eine Länge von ca. 40 mm und eine Breite von ca. 10 mm. Der Abstand zwischen der Mitte zweier Löcher 7 beträgt ca. 90 mm, so daß zwischen zwei benachbarten Löchern ein Abstand von ca. 50 mm besteht. Selbstverständlich können auch mehr als drei Löcher 7 in einem U-Schenkel 3, 4 angeordnet sind, wobei die Löcher 7 auch unterschiedliche Abstände voneinander haben können.

Ebenso können auch alternativ oder zusätzlich Löcher im U-Rücken 2 vorgesehen sein, wobei jedoch berücksichtigt werden muß, daß die Anzahl der Löcher 7 nicht zu groß gewählt wird, damit der Weinbergpfahl 1 beim Einschlagen nicht einknickt. Durch die Ausbildung der Löcher 7 in den U-Schenkel 3, 4 verringert sich der Widerstand beim Eindrücken des Weinbergpfahls 1 in den Boden deutlich. Dadurch ist es möglich, die erreichbare Einschlagtiefe deutlich, um 200 - 300 mm, auf beispielsweise 700 - 800 mm zu steigern, so daß auch bei festem Boden auf das Ausbilden eines Setzloches mit einer Lanze verzichtet werden kann.

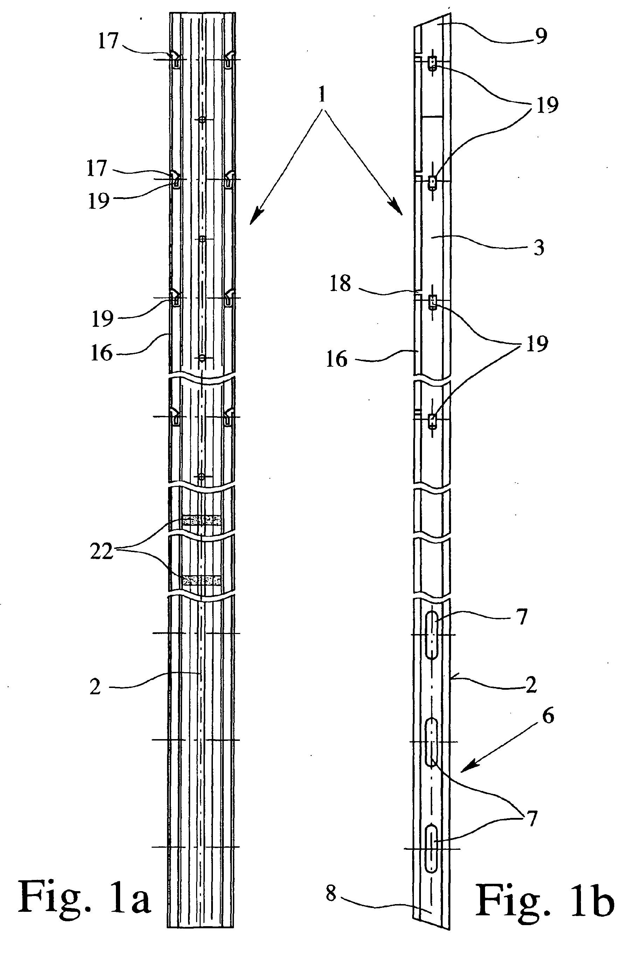

Wie aus der in Fig. 1b gezeigten Seitenansicht des Weinbergpfahles 1 erkennbar ist, sind das untere Ende 8 und das obere Ende 9 des Pfahles 1 in Drahtrichtung 10 gesehen derart abgeschrägt, daß der U-Rücken 2 eine größere Länge als die Endbereiche der U-Schenkel 3, 4 aufweist. Durch die Abschrägung insbesondere des oberen Endes 9 des Weinbergpfahls 1 wird erreicht, daß ein beim Eindrücken des Weinbergpfahls 1 in den Boden verwendeter Drückbalken in erster Linie am U-Rücken 2 und nicht an den U-Schenkeln 3, 4 angreift. Dadurch wird verhindert, daß sich die Endbereiche der U-Schenkel 3, 4 beim Eindrücken des Weinbergpfahls 1 in das Holz des Drückbalkens bohren, ohne das hierzu ein zusätzlicher Schlagschutz verwendet werden muß.

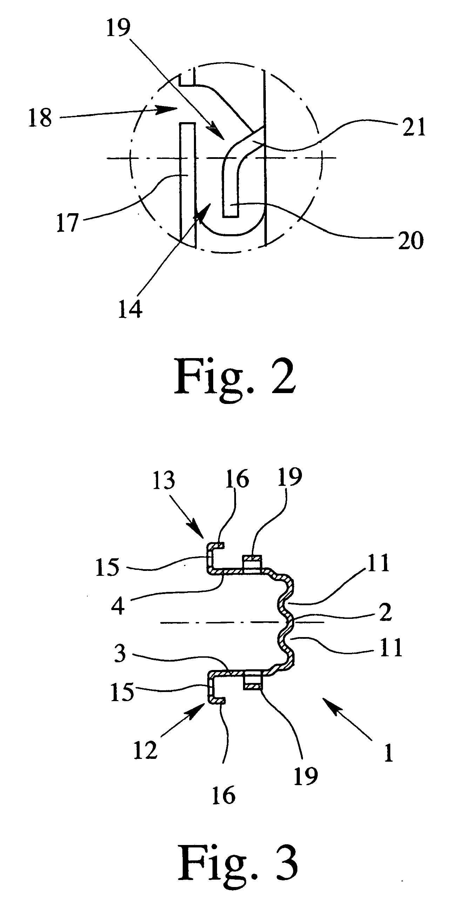

Aus der Querschnittsdarstellung des Weinbergpfahls 1 in Fig. 3 ergibt sich, daß der U-Rücken 2 wellenförmig verläuft, nämlich mehrere Sicken 11 aufweist. Die Sicken 11 bewirken eine Erhöhung der Stabilität des Weinbergpfahls 1, wobei im Unterschied zu dem hier dargestellten Ausführungsbeispiel bedarfsweise zusätzlich in den U-Schenkeln 3, 4 mindestens eine Sicke ausgebildet sein kann.

Aus der Fig. 3 ist darüber hinaus erkennbar, daß die Endbereiche der U-Schenkel 3, 4 im wesentlichen U-förmig nach außen abgebogen sind, so daß die Endbereiche der U-Schenkel 3, 4 offene Rinnen 12, 13 bilden. Der Weinbergpfahls 1 hat somit einen etwa Ω-förmigen Querschnitt. In den Rinnen 12, 13 sind nach oben offene Aufnahmetaschen 14 zur Aufnahme des Drahts 5 ausgebildet, wobei die Aufnahmetaschen 14 ein im Rücken der Rinnen 12, 13 ausgebildetes Aufnahmefenster 15 und eine im Randbereich 16 der Rinnen 12, 13 ausgebildete Zunge 17 aufweisen, so daß ein Draht 5 durch den zwischen der Zunge 17 und dem Randbereich 16 gebildeten Schlitz 18 in die Aufnahmetasche 14 hineingelegt bzw. aus der Aufnahmetasche 14 heraushoben kann.

An den U-Schenkeln 3 und 4 des Weinbergpfahls 1 sind darüber hinaus jeweils mehrere nach unten offene, zungenartige Haken 19 als Mittel zur Aufnahme bzw. Führung eines Drahtes 5 ausgebildet. Der Weinbergpfahl 1 weist somit an jedem U-Schenkel 3, 4 zwei Arten von Aufnahmemitteln auf, nämlich zum einen die in den Rinnen 12, 13 ausgebildeten Aufnahmetaschen 14 und zum anderen die an den U-Schenkeln 3, 4 abgebogenen Haken 19. Die Aufnahmetaschen 14 haben dabei die Funktion eines "Haupthakens", in dem der Draht 5 in seiner "normalen" Lage gehalten ist, während die Haken 19 die Funktion eines "Hilfshakens" übernehmen. Durch den "Hilfshaken" wird dabei ein ungewolltes Herausfallen des Drahtes 5 aus der Aufnahmetasche 14 verhindert.

Wie insbesondere aus der Fig. 2 ersichtlich ist, verläuft der Haken 19 mit seinem Hauptbereich 20 im wesentlichen parallel zum jeweiligen U-Schenkel 3, 4, wobei der Abstand zwischen dem Hauptbereich 20 des Hakens 19 und dem U-Schenkel 3, 4 etwas größer als der Durchmesser eines Drahtes 5 ist. Dabei ist aus der Fig. 2 zu entnehmen, daß sich der Haken 19 in Drahtrichtung 10 gesehen innerhalb des in der Rinne 12, 13 angeordneten Aufnahmefensters 15 erstreckt. Die lichte Weite zwischen dem Hauptbereich 20 des Hakens 19 und der im Randbereich 16 der Rinne 12, 13 ausgebildeten Zunge 17 ist ebenfalls etwas größer als der Durchmesser des Drahtes 5. Entsprechendes gilt für den Abstand zwischen dem unteren Rand des Hakens 19 und dem unteren Rand der Aufnahmetasche 14.

Durch diese Dimensionierung der Aufnahmetasche 14 und des Hakens 19 kann ein Draht 5 zunächst durch den Schlitz 18 in die Aufnahmetasche 14 eingeführt werden, anschließend zwischen der Zunge 17 und dem Hauptbereich 20 des Hakens 19 nach unten gedrückt und dann entlang des unteren Randes der Aufnahmetasche 14 unter dem unteren Rand des Hakens 19 vorbeigeführt werden, so daß der Draht 5 schließlich zwischen dem Haken 19 und dem U-Schenkel 3 bzw. 4 gelangt. Der Draht 5 befindet sich somit nach dem Einhängen im oberen Bogen 21 des Hakens 19, wobei sich der Draht 5 jedoch aufgrund des im Laufe der Zeit zunehmenden Gewichtes der Trauben nach unten bewegen kann und dabei durch die Zunge 17 gegen Aushängen gesichert ist.

In den beiden Darstellungen der Fig. 4 ist der Draht 5 jeweils einmal in der "normalen" unteren Lage und einmal in einer zweiten, bei einer entsprechenden Position des Weinbergpfahls 1 im Weinberg möglichen, "kritischen" Lage dargestellt. In der "normalen", unteren Lage liegt der Draht 5 in der Aufnahmetasche 14 und wird durch die Zunge 17 gegen Aushängen gesichert. Bei der in Fig. 4 a dargestellten oberen zweiten Lage des Drahtes 5' befindet sich der Weinbergpfahl 1 in einer Senke im Weinberg und der Draht 5' wird durch den Haken 19 am Weinbergpfahl 1 gesichert. Bei der Darstellung gemäß der Fig. 4 b befindet sich der Weinbergpfahl 1 in einem Weinberg, in dem die Weinbergpfähle 1 einer Zeile entlang eines Hanges angeordnet sind. Auch hierbei wird der Draht 5' in seiner "kritischen" Lage durch den Haken 19 gesichert, so daß der Draht 5' nicht durch den Schlitz 18 in der Aufnahmetasche 14 herausfallen kann.

Aus Fig. 1 a ist schließlich erkennbar, daß am U-Rücken 2 zwei Markierungen 22 vorgesehen sind, die als Setzmarken dienen. Durch die Markierungen 22 wird somit auf einfache Art und Weise angezeigt, wie weit der Weinbergpfahl 1 in den Boden eingedrückt werden muß. Als Markierung 22 kann dabei insbesondere eine farbliche Markierung oder eine andere optische Markierung, beispielsweise eine Profilierung, verwendet werden. Die beiden Markierungen 22 können dabei die minimale und die maximale Einschlagtiefe anzeigen. Ebenso ist es jedoch auch möglich, daß unterschiedliche Markierungen 22 für unterschiedliche Böden vorgesehen sind.

Durch die vorliegende Erfindung wird ein Weinbergpfahl 1 angegeben, der wesentlich einfacher als bisheriges Weinbergpfähle 1 in den Boden eingedrückt werden kann, wobei der erfindungsgemäße Weinbergpfahl 1 außerdem eine hohe Standfestigkeit im Boden und eine ausreichende Stabilität aufweist. Versuche haben gezeigt, daß herkömmliche Weinbergpfähle 1 mit einer Länge von beispielsweise 170 cm ohne Nachschlagen nur bis zu einer Tiefe von ca. 50 mm in verdichteten oder leicht steinigen Boden eingetrieben werden konnten, ohne die Weinbergpfähle zu beschädigen. Dagegen konnten erfindungsgemäße Weinbergpfähle 1 gleicher Länge, bei denen in beiden U-Schenkeln 3, 4 mehrere Löcher 7 ausgestanzt waren, ohne Nachschlagen bis zu einer Tiefe von ca. 70 mm und mehr in den gleichen Boden eingeschlagen werden, ohne daß die Weinbergpfähle 1 beschädigt wurden.

## Patentansprüche

1. Pfahl aus profilgewalztem Metallblech für den Wein- oder Obstbau, insbesondere Weinbergpfahl, mit einem im wesentlichen U-förmigen Querschnitt, mit einem U-Rücken (2) und mit zwei U-Schenkeln (3, 4) und mit Mitteln zur Aufnahme von Drähten (5), wobei die Mittel durch Ausstanzen und/oder Formbiegen aus den U-Schenkeln (3, 4) gebildet sind,
**dadurch gekennzeichnet,**
**daß** im unteren Endbereich (6) in mindestens einem U-Schenkeln (3, 4) und/oder im U-Rücken (2) mindestens ein Loch (7) ausgebildet ist.

2. Pfahl nach Anspruch 1, **dadurch gekennzeichnet, daß** in beiden U-Schenkeln (3, 4) jeweils mehrere Löcher (7) übereinander angeordnet sind.

3. Pfahl nach Anspruch 1 oder 2, **dadurch gekennzeichnet, daß** das Loch (7) bzw. die Löcher (7) als Langlöcher ausgebildet sind, mit einer Länge von vorzugsweise 30 bis 50 mm und einer Breite von vorzugsweise 5 bis 20 mm.

4. Pfahl nach einem der Ansprüche 1 bis 3, **dadurch gekennzeichnet, daß** das untere Ende (8) und/oder das obere Ende (9) in Drahtrichtung (10) gesehen derart abgeschrägt ist, daß der U-Rücken (2) länger als die Endbereiche der U-Schenkel (3, 4) ist.

5. Pfahl nach einem der Ansprüche 1 bis 4, **dadurch gekennzeichnet, daß** zumindest im U-Rücken (2) Sicken (11) ausgebildet sind, so daß der U-Rücken (2) im Querschnitt nicht eben sondern wellig verläuft.

6. Pfahl nach einem der Ansprüche 1 bis 5, **dadurch gekennzeichnet, daß** die Endbereiche der U-Schenkel (3, 4) im wesentlichen U-förmig nach außen abgebogen sind, so daß die Endbereiche der U-Schenkel (3, 4) offene Rinnen (12, 13) bilden, wobei in den Rinnen (12, 13) zusätzliche Mittel zur Aufnahme der Drähte (5) durch Ausstanzen und/oder Formbiegen aus den Rinnen (12, 13) ausgebildet sind.

7. Pfahl nach Anspruch 6, **dadurch gekennzeichnet, daß** die Mittel zur Aufnahme der Drähte (5) in den U-Schenkeln (3, 4) und die Mittel zur Aufnahme der Drähte (5) in den Rinnen (12, 13) jeweils in Drahtrichtung (10) paarweise hintereinanderliegend und im wesentlichen auf gleicher Höhe angeordnet sind.

8. Pfahl nach Anspruch 6 oder 7, **dadurch gekennzeichnet, daß** in den Rinnen (12, 13) nach außen offene Aufnahmetaschen (14) zur Aufnahme des Drahts (5) ausgebildet sind, wobei die Aufnahmetaschen (14) ein im Rücken der Rinnen (12, 13) ausgebildetes Aufnahmefenster (15) und eine im Randbereich (16) der Rinne (12, 13) ausgebildete Zunge (17) aufweisen, so daß ein Draht (5) durch den zwischen Zunge (17) und Randbereich (16) gebildeten Schlitz (18) in die Aufnahmetasche (14) hineingelegt bzw. aus der Aufnahmetasche (14) herausgehoben werden kann.

9. Pfahl nach Anspruch 8, **dadurch gekennzeichnet, daß** an den U-Schenkeln (3, 4) je mindestens ein nach unten offener, zungenartiger Haken (19) als Mittel zur Aufnahme eines Drahtes (6) ausgebildet ist, und daß sich die im Randbereich (16) der Rinne (12, 13) ausgebildete Zunge (17) nach oben erstreckt, die Aufnahmetasche (14) somit nach unten geschlossen ist.

10. Pfahl nach Anspruch 9, **dadurch gekennzeichnet, daß** der Haken (19) mit seinem Hauptbereich (20) im wesentlichen parallel zum U-Schenkel (3, 4) verläuft und der Abstand zwischen dem Hauptbereich (20) des Hakens (19) und dem U-Schenkel (3, 4) mindestens so groß ist wie der Durchmesser des Drahtes (5), vorzugsweise bis zu 50 % größer als der Durchmesser des Drahtes (6) ist.

11. Pfahl nach einem der Ansprüche 1 bis 10, **dadurch gekennzeichnet, daß** am U-Rücken (2) und/oder an den U-Schenkeln (3, 4) mindestens eine Markierung (22), insbesondere eine Farbmarkierung, vorgesehen ist, die als Setzmarke dient.

## Claims

1. Post made of profile-rolled sheet metal for viniculture or pomiculture, in particularly a vineyard post, having an essentially U-shaped cross section, with a U-back (2) and with two U-legs (3, 4) and having means for receiving wires (5), the means being formed from the U-legs (3, 4) by stamping and/or forming and bending,
**characterized in**
**that** at least one hole (7) is formed in the bottom end region (6) in at least one U-leg (3, 4) and/or in the U-back (2).

2. Post according to claim 1, **characterized in that** a plurality of holes (7) are arranged one above the other in each of the two U-legs (3, 4).

3. Post according to claim 1 or 2, **characterized in that** the hole (7) or the holes (7) is/are designed as elongated holes with a length of preferably 30 to 50 mm and a width of preferably 5 to 20 mm.

4. Post according to one of claims 1 to 3, **characterized in that** the bottom end (8) and/or the top end (9), as seen in the wire direction (10), are/is bevelled such that the U-back (2) is longer than the end regions of the U-legs (3, 4).

5. Post according to one of claims 1 to 4, **characterized in that** beads (11) are formed at least in the U-back (2), in which case the U-back (2) runs in an undulating, rather than planar manner in cross section.

6. Post according to one of claims 1 to 5, **characterized in that** the end areas of the U-legs (3, 4) are bent outwards in an essentially U-shaped manner, so that the end areas of the U-legs (3, 4) form open channels (12, 13), wherein additional means for receiving the wires (5) being formed in the channels (12, 13) by stamping and/or forming and bending the same.

7. Post according to claim 6, **characterized in that** the means for receiving the wires (5) in the U-legs (3, 4) and the means for receiving the wires (5) in the channels (12, 13), are each positioned in the wire direction (9) one behind another in pairs and essentially at the same height.

8. Post according to claim 6 or 7, **characterized in that** receiving pockets (14) which are open in the outward direction are formed in the channels (12, 13) for receiving the wire (5), the receiving pockets (14) having a receiving window (15), formed in the back of the channels (12, 13), and a tongue (17), formed in the edge area (16) of the channel (12, 13), so that a wire (5) can be positioned in the receiving pocket (14), and/or lifted out of the receiving pocket (14), through the slot (18) formed between the tongue (17) and the edge area (16).

9. Post according to claim 8, **characterized in that** in each case at least one tongue-like hook (19) which is open in the downward direction is formed on the U-legs (3, 4) as a means for receiving a wire (5), and **in that** the tongue (17), which is formed in the edge area (16) of the channel (12, 13) extends upwards, the receiving pocket (14) thus being closed in the downward direction.

10. Post according to claim 9, **characterized in that** the hook (19) has its main region (20) being essentially parallel to the U-leg (3, 4), and the distance between the main region (20) of the hook (19) and the U-leg (3, 4) is at least equal to the diameter of the wire (5), preferably up to 50% larger than the diameter of the wire (5).

11. Post according to one of claims 1 to 10, **characterized in that** at least one marking (22), in particular a coloured marking, is provided on the U-back (2) and/or on the U-legs (3, 4), and serves as a positioning mark.

## Revendications

1. Piquet en tôle métallique profilée laminée pour la viticulture et la culture fruitière, notamment piquet de vigne, ayant une section transversale essentiellement en forme de U avec une dos de U (2) et deux branches de U (3, 4), et avec des moyens de réception des fils (5), les moyens étant formés par estampage et/ou formage et pliage à partir des branches du U (3, 4),
**caractérisé en ce**
**qu'**au moins un trou (7) est formé dans la région d'extrémité inférieure (6) dans au moins l'une des branches du U (3, 4) et/ou dans le dos du U (2).

2. Piquet selon la revendication 1, **caractérisé en ce que** plusieurs trous (7) sont à chaque fois réalisés les uns au-dessus des autres dans les deux branches du U (3, 4).

3. Piquet selon la revendication 1 ou 2, **caractérisé en ce que** le trou (7) ou les trous (7) sont réalisés sous forme de trous oblongs ayant une longueur de préférence de 30 à 50 mm et une largeur de préférence de 5 à 20 mm.

4. Piquet selon l'une quelconque des revendications 1 à 3, **caractérisé en ce que** l'extrémité inférieure (8) et/ou l'extrémité supérieure (9), vues dans la direction du fil (10), sont biseautées de telle sorte que le dos du U (2) soit plus longue que les régions d'extrémité des branches du U (3, 4).

5. Piquet selon l'une quelconque des revendications 1 à 4, **caractérisé en ce que** des moulures (11) sont réalisées au moins dans le dos du U (2), de sorte que le dos du U (2) ne s'étende pas de manière plane mais ondulée en section transversale.

6. Piquet selon l'une quelconque des revendications 1 à 5, **caractérisé en ce que** les régions d'extrémité des branches du U (3, 4) sont cintrées essentiellement en forme de U vers l'extérieur, de sorte que les régions d'extrémité des branches du U (3, 4) forment des rainures ouvertes (12, 13), des moyens supplémentaire pour recevoir les fils (5) étant réalisés dans les rainures (12, 13) par estampage et/ou formage et pliage hors des rainures (12, 13).

7. Piquet selon la revendication 6, **caractérisé en ce que** les moyens de réception les fils (5) dans les branches du U (3, 4) et les moyens de réception les fils (5) dans les rainures (12, 13) sont respectivement disposés par paires les uns derrière les autres dans la direction (10) du fil et essentiellement à la même hauteur.

8. Piquet selon la revendication 6 ou 7, **caractérisé en ce que** dans les rainures (12, 13) sont réalisées des poches de réception ouvertes vers l'extérieur (14) pour recevoir le fil (5), les poches de réception (14) comportent une fenêtre de réception (15) formée dans le dos des rainures (12, 13) et une languette (17) formée dans la zone des bords (16) de la rainure (12, 13), de sorte qu'un fil (5) puisse être enfilé ou bien puisse être ressorti de la poche de réception (14) à travers la fente (18) formée entre la languette (17) et la région des bords (16) dans la cavité de réception (14).

9. Piquet selon la revendication 8, **caractérisé en ce qu'**au moins un crochet (19) en forme de langue, ouvert vers le bas, est réalisé au niveau des branches du U (3, 4) à chaque fois en tant que moyen pour recevoir un fil (6), et **en ce que** la langue (17) réalisée dans la zone des bords (16) de la rainure (12, 13) s'étend vers le haut, et qu'ainsi la poche de réception (14) est fermée vers le bas.

10. Piquet selon la revendication 9, **caractérisé en ce que** le crochet (19) s'étend avec sa région principale (20) essentiellement parallèlement à la branche du U (3, 4), et la distance entre la région principale (20) du crochet (19) et la branche du U (3, 4) est au moins égale au diamètre du fil (5), de préférence est jusqu'à 50% plus grande que le diamètre du fil (5).

11. Piquet selon l'une quelconque des revendications 1 à 10, **caractérisé en ce que** l'on prévoit au niveau de le dos du U (2) et/ou au niveau des branches du U (3, 4) au moins un marquage (22), notamment un marquage de couleur qui sert de marque de positionnement.
